(19) Europäisches Patentamt
European Patent Office
Office européen des brevets

(11) Veröffentlichungsnummer: **0 210 402**
**B1**

(12) # EUROPÄISCHE PATENTSCHRIFT

(45) Veröffentlichungstag der Patentschrift: **18.10.89**

(51) Int. Cl.⁴: **C 08 G 77/08**, C 08 G 77/18

(21) Anmeldenummer: **86108237.8**

(22) Anmeldetag: **16.06.86**

(54) **Verfahren zur Herstellung von Poly(diorganosiloxanen) mit Alkoxyendgruppen.**

(30) Priorität: **28.06.85 DE 3523206**

(43) Veröffentlichungstag der Anmeldung:
**04.02.87 Patentblatt 87/6**

(45) Bekanntmachung des Hinweises auf die Patenterteilung:
**18.10.89 Patentblatt 89/42**

(84) Benannte Vertragsstaaten:
**AT BE CH DE FR GB IT LI NL SE**

(56) Entgegenhaltungen:
**EP-A- 0 070 786**
**DE-A- 1 247 646**
**DE-A- 3 428 840**

(73) Patentinhaber: **BAYER AG,**
**D-5090 Leverkusen 1 Bayerwerk (DE)**

(72) Erfinder: **Weber, Wilhelm, Dr., Rybniker Strasse 12, D-5000 Köln 80 (DE)**
Erfinder: **Sockel, Karl-Heinz, Elisenstrasse 13, D-5090 Leverkusen 1 (DE)**
Erfinder: **Achtenberg, Theo, Dipl.-Ing., Im Bergischen Heim 6, D-5090 Leverkusen 3 (DE)**
Erfinder: **Sattlegger, Hans, Dr., Auf dem Heidchen 9, D-5068 Odenthal (DE)**

**EP 0 210 402 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Herstellung von Poly(diorganosiloxanen) mit Diorganyloxy-organosilyl- oder Triorganyloxysilyl-Endgruppen durch Umsetzung von α,ω-Dihydroxypoly(diorganosiloxanen) mit Alkoxysilanen in Gegenwart von katalytisch wirkenden Ammonium-Carbamaten.

Es sind bereits mehrere Verfahren zur Herstellung der erfindungsgemäßen Polymere bzw. von solche Polymere enthaltenden Formulierungen bekannt geworden. Die Produkte werden zur Herstellung von 1-Komponenten Siliconpasten verwandt, die in Gegenwart von Feuchtigkeit zu Elastomeren aushärten, im folgenden – 1K-RTV-Massen – genannt.

In US-PS 3 161 614 wird die Umsetzung von α,ω-Dihydroxy-(polydiorgano)siloxanen mit mehrfunktionellen Halogensilanen, z.B. $SiCl_4$ oder $CH_3SiCl_3$, beschrieben. Die daraus resultierenden halogenhaltigen Polysiloxane werden dann in Gegenwart von Säurefängern durch Alkohole in Di- oder Triorganyloxysilyl-endgestoppte Polysiloxane überführt.

In der selben Patentschrift wird auch die Umsetzung von α,ω-Dihydroxypoly(diorganosiloxanen) mit Alkoxysilanen in Gegenwart geeigneter Katalysatoren, wie Aminen und Metallcarboxylaten erwähnt.

In EP 21859 und in EP 69256 wird die Herstellung von 1K-RTV-Massen beschrieben. Nach diesen Veröffentlichungen können α,ω-Dihydroxypoly(diorganosiloxane) in Gegenwart von Aminen mit Alkoxysilanen zu den erfindungsgemäßen Polymeren umgesetzt werden.

In EP 70786 wird die Verwendung von Hydroxylaminderivaten anstelle von Aminen als Katalysatoren beschrieben.

Weiterhin sind gemischt-funktionelle Silane bekanntgeworden, die mit α,ω-Dihydroxypoly(diorganosiloxanen) im Gegensatz zu reinen Organyloxy- bzw. Organyloxyorganosilanen auch ohne Verwendung von Katalysatoren zu den erfindungsgemäß hergestellten Polysiloxanen umgesetzt werden können. Hierunter fallen Alkoxyamidosilane (DE-PS 1 247 646), Alkoxy-oximinosilane (EP 98369) und Alkoxy-acetoxysilane (US-PS 3 296 195).

Alle bisher beschriebenen Verfahren zur Herstellung der genannten Polysiloxane weisen Nachteile auf. Das Verfahren der Umsetzung von α,ω-Dihydroxypoly(diorganosiloxanen) mit Halogensilanen mit anschließender Alkoholyse (US-PS 3 161 614) führt zu Polymeren, die korrosiv wirkende Ammoniumsalze enthalten und ist umständlich. Das Gelingen des im selben Dokument erwähnten Verfahrens der Umsetzung von α,ω-Dihydroxypoly(diorganosiloxanen) mit Alkoxysilanen in Gegenwart von Aminkatalysatoren hängt im wesentlichen von der Basenstärke des verwendeten Katalysators ab. Mit der Basenstärke wächst die katalytische Wirksamkeit der Amine, aber auch die Neigung zu unerwünschten Polymerumlagerungen. So ist beispielsweise von starken Basen wie KOH oder Kaliumsiloxanolaten bekannt (US-PS 2 909 549), daß sie mit Cyclotetra(dimethylsiloxan) zu Monoorganyloxy-end-gestoppten Poly(diorganosiloxanen) führen. In ähnlicher Weise entstehen aus α,ω-Dihydroxypoly(diorganosiloxanen) und Alkoxysilanen in Gegenwart von KOH rasch verzweigte Polysiloxane, die Monoorganyloxy-diorganosilyl-Endgruppen aufweisen. Aus solchen Polysiloxanen können keine funktionsfähigen 1K-RTV-Massen hergestellt werden. Man ist bei Aminen offenbar auf Mono- und Dialkylamine beschränkt, die einen Kompromiß zwischen der Aktivität des Katalysators hinsichtlich des gewünschten Endstoppungsprozesses und der unerwünschten Umlagerung darstellen. Die Umsetzung der OH-Endgruppen läuft aber in Gegenwart von Dialkylaminen nur dann ausreichend schnell ab, wenn besonders reaktionsfähige Silane Verwendung finden. Andernfalls müssen die Formulierungen längere Zeit bei erhöhter Temperatur gehalten werden, was in der Praxis der Herstellung von 1K-RTV-Massen einen Nachteil darstellt.

Die in US-PS 2 909 549 erwähnte Katalyse der Umsetzung von α,ω-Dihydroxypoly(diorganosiloxanen) mit Alkoxysilanen durch Metallcarboxylate, wie Diorganozinncarboxylate, hat sich für die Praxis der Herstellung von 1K-RTV-Massen als gänzlich ungeeignet erwiesen, da auf diese Weise hergestellte Massen während der Herstellung oder Lagerung der Produkte Vernetzungserscheinungen zeigen. Die in EP 70786 als Katalysatoren beschriebenen Hydroxylaminderivate besitzen zwar eine verbesserte Aktivität im Vergleich zu Mono- und Dialkylaminen, führen aber nach der Formulierung zu 1K-RTV-Systemen in vielen Fällen zu Verfärbungserscheinungen und müssen aus dem System entfernt werden.

Gemischt funktionelle Alkoxysilane, die neben den Alkoxygruppen einen Amido-, Amino-, Oximino- oder Carboxylatorest tragen, ergeben mit α,ω-Dihydroxypoly(diorganosiloxanen) glatt die gewünschten Poly(diorganosiloxane) mit Triorganyloxysilyl- oder Diorganyloxyorganosilyl-Endgruppen. Die Herstellung der Silane ist jedoch meist kostspielig und die Entfernung der Spaltprodukte macht bei der Herstellung der Formulierungen eigene Verfahrensschritte erforderlich oder ist in der Praxis undurchführbar. Die Entfernung der aus den erwähnten Silanen entstehenden Spaltprodukte wäre aber beispielsweise für die Formulierung von chemisch neutralen, transparenten Systemen wünschenswert.

Es wurde nun gefunden, daß man Triorganyloxysilyl- bzw. Diorganyloxyorganosilyl-endgestoppte Poly(diorganosiloxane) oder solche Siloxane enthaltende Formulierungen aus α,ω-Dihydroxypoly(diorganosiloxanen) und Tetraorganyloxysilanen oder Triorganyloxyorganosilanen herstellen kann, wenn man als Katalysatoren Ammoniumcarbamate der Formel I verwendet,

$$R_4N^+ \quad {}^-O\text{-}\underset{\underset{O}{\|}}{C}\text{—}NR_2 \qquad (I)$$

wobei R einen Kohlenwasserstoffrest mit bis zu 20 C-Atomen oder ein H-Atom bedeutet und im Molekül gleiche oder verschiedene Reste R vorkommen können.

Als Reste R sind Wasserstoff und Methylgruppen bevorzugt.

Es ist überraschend, daß bei der Verwendung der Katalysatoren I weniger drastische Bedingungen erforderlich sind als bei den als Katalysatoren vorbeschriebenen Aminen. Es ist weiterhin überraschend, daß in Gegenwart der Carbamate I störende Polymerumlagerungen ausbleiben, die Monoorganyloxydiorganosilyl-Endgruppen erzeugen.

Für das erfindungsgemäße Verfahren sind alle bekannten α,ω-Dihydroxypoly(diorganosiloxane) geeignet, wobei die Organylreste bevorzugt Methylreste sind. Als weiteres Beispiel sollen gemischte Methylphenylpolysiloxane genannt werden.

Zur Umsetzung mit den α,ω-Dihydroxypoly(diorganosiloxanen) eignen sich Verbindungen der Typs II:

$$R^1_m\,Si(OR^1)_{4-m}, \qquad (II)$$

wobei $R^1$ ein gesättigter oder ungesättigter Kohlenwasserstoffrest sein kann. Das Molekül kann verschiedene Reste $R^1$ enthalten. Der Index m ist 0 oder 1.

Bevorzugt sind für $R^1$ Methyl, Ethyl, Vinyl- oder Propenylgruppen.

Die als Katalysatoren geeigneten Ammoniumcarbamate sind am einfachsten durch Umsetzung von Aminen mit Kohlendioxid erhältlich (H. Hagemann und U. Petersen, «Carbamidsäuren und deren Salze» in Houben-Weyl, Methoden der organischen Chemie, Georg Thieme Verlag Stuttgart-New York, 4. Auflage 1983, Bd. E4 S. 142 oder EP 88377).

Das erfindungsgemäße Verfahren wird, wenn es die Reaktivität des verwendeten Silans zuläßt, bei Raumtemperatur oder etwas darüber durchgeführt. Bevorzugt werden Temperaturen unter 100°C. Das Verfahren kann man beispielsweise in der Weise durchführen, daß 100 Teile eines α,ω-Dihydroxypoly(diorganosiloxans) mit 0 bis 100 Teilen eines α,ω-Bis(trimethylsiloxy)poly(diorganosiloxans) und 0 bis 400 Teilen eines Füllstoffes vermischt werden, daß man dann 0,02 bis 2 Teile eines Katalysators der Zusammensetzung I zugibt,

$$R_4N^+ \quad {}^-O-\underset{\underset{O}{\|}}{C}-NR_2 \qquad (I)$$

und daß man 1 bis 20 Teile eines Silans II zusetzt,

$$R^1_m\,Si(OR^1)_{4-m}, \qquad (II)$$

wobei die Reste R und $R^1$ und der Index m wie oben definiert sind.

Die Umsetzung kann in Kesseln oder in Mischaggregaten wie Planetenmischern, Dissolvern und in kontinuierlich arbeitenden Mischern durchgeführt werden.

Den erfindungsgemäß herzustellenden Formulierungen können Füllstoffe zugesetzt werden. Darunter fallen beispielsweise pyrogene und gefällte Kieselsäure, gemahlener Quarz oder Cristobalit, natürliche und gefällte Carbonate wie Kreide und Dolomit, Silicate wie Wollastonit, Glimmer, Talk oder Schiefermehl sowie Ruß und organische polymere Füllstoffe. Zweckmäßigerweise mischt man im Falle der späteren Verwendung der Formulierung als 1K-RTV-Masse die Füllstoffe vor Beginn oder während des erfindungsgemäßen Verfahrensschrittes ein, da auf diese Weise gleichzeitig mit der Bildung der gewünschten Endstoppung die den Füllstoffen anhaftende Feuchtigkeit mit den Organyloxysilanen abreagieren kann. Im Falle der oberflächenreichen Kieselsäuren dürften außerdem die an der Füllstoffoberfläche befindlichen SiOH-Gruppen abgesättigt werden. Die beiden letztgenannten Vorgänge können für die Formulierung einer lagerstabilen 1K-RTV-Masse wichtig sein.

Die nach dem erfindungsgemäßen Verfahren erhaltenen Formulierungen können weiterhin α,ω-Bis(trimethylsiloxy)poly(diorganosiloxane) als Weichmacher enthalten.

Für die Verwendung als 1K-RTV-Masse können den erfindungsgemäß hergestellten Produkten weitere Hilfsstoffe zugesetzt werden. Darunter fallen Vernetzungskatalysatoren wie Zinn- und Titanverbindungen oder Amine. Auch Gemische dieser Katalysatoren können Verwendung finden. Weiterhin können die Haftung verbessernde Zusätze benutzt werden, insbesondere solche, als Haftmittel bekannte Silane, die über Kohlenwasserstoffreste mit den Siliciumatomen verknüpfte funktionelle Reste tragen, z.B.

$H_2N\ CH_2\text{-}CH_2\text{-}CH_2\text{-}Si(OC_2H_5)_3$,
$H_2\ N\text{-}CH_2\text{-}CH_2\text{-}NH\text{-}CH_2\text{-}CH_2\text{-}CH_2\text{-}Si(OCH_3)_3$ oder
$CH_2—CH\text{-}CH_2\text{-}O\text{-}CH_2\text{-}CH_2\text{-}CH_2\text{-}Si(OCH_3)_3$.
O

Nach einer bevorzugten Ausführungsform setzt man als Organyloxysilane Methoxysilane wie Vinyltrimethoxysilan, Methyltrimethoxysilan oder Tetramethoxysilan ein. Die Reaktivität dieser Silane in Gegenwart der beschrfiebenen Carbamat-Katalysatoren reicht aus, um die Umsetzung mit α,ω-Dihydroxypoly(diorganosiloxanen) bei Raumtemperatur oder wenig darüber innerhalb kurzer Zeit praktisch quantitativ ablaufen zu lassen. Das Entfernen des beim beschriebenen Verfahren entstehenden Alkohols kann für die Verwendung als 1K-RTV-Masse von Vorteil sein. Als Carbamat-Katalysatoren sind solche Verbindungen I bevorzugt, die als Reste R Methylgruppen oder Methylgruppen und Wasserstoffatome enthalten, z.B. $(CH_3)_2NH_2\ OCON(CH_3)_2$. Im Vakuum lassen sich die daraus in der Wärme entstehenden Amine, der niedrigen Siedepunkte wegen, leicht entfernen.

Das erfindungsgemäße Verfahren soll anhand der folgenden Beispiele näher erläutert werden.

*Beispiel 1*

100 Gew.-Teile eines α,ω-Dihydroxypoly(dimethylsiloxans) der mittleren Kettenlänge 20 wurden mit 38 Gew.-Teilen Vinyltrimethoxysilan und mit 1,35 Gew.-Teilen Dimethylammonium-N,N-dimethylcarbamat vermischt. Nach 15 Minuten wurden entstandenes Methanol und nicht umgesetztes Silan bei 1 mbar und unter langsamem Aufheizen auf 70°C entfernt. Aus dem $^1H$ NMR Spektrum des Produkts ließ sich auf einen Umsatz zu mehr als 95% schließen. Ein SiOH-Signal war nicht mehr nachweisbar.

*Beispiel 2* (Vergleich)

Wie Beispiel 1, aber unter Verwendung von 1,3 Gew.-Teilen Dibutylamin anstatt Dimethylammonium-N,N-dimethylcarbamat. Nach dem Entfernen der flüchtigen Anteile im Vakuum bei 70°C zeigte ein $^1H$ NMR Spektrum des Rückstandes noch ein deutliches SiOH-Signal an.

*Beispiel 3*

100 Gew.-Teile eines α,β-Dihydroxypoly(dimethylsiloxans) mit der Viskosität 50 Pa.s wurden in einem Planetenmischer mit 39 Gew.-Teilen eines α,ω-Bis(trimethylsiloxy)poly(dimethylsiloxans) mit der Viskosität 1 Pa.s, 0,7 Gew.-Teilen Dimethylammonium-N,N-dimethylcarbamat, 6,5 Gew.-Teilen Vinyltrimethoxysilan und 15 Gew.-Teilen einer hydrophobierten pyrogenen Kieselsäure mit einer BET-Oberfläche von 110 $m^2/g$ in der angegebenen Reihenfolge vermischt. Nach 15 Minuten Rühren wurden 0,065 Gew.-Teile Dibutylzinndilaurat zugesetzt und die Masse in gegen Wasserdampf abgedichtete Kartuschen abgefüllt. Proben des Materials wurden zu Fellen ausgezogen und nach 14tägiger Aushärtung bei 25°C und 50% relativer Luftfeuchtigkeit nach DIN 53504 geprüft.

| | |
|---|---|
| Bruchdehnung: | 550% |
| Zugfestigkeit: | 1,1 $N/mm^2$ |
| E-Modul: | 0,3 $N/mm^2$ |

Das in den Kartuschen verbliebene Produkt war nach 4wöchiger Lagerung nicht vernetzt. Es härtete nach dem Ausspritzen unter dem Einfluß der Luftfeuchtigkeit zu einem Elastomer, das ähnliche mechanische Eigenschaften aufwies wie die sofort extrudierte Probe.

*Beispiel 4*

Beispiel 3 wurde ohne die Verwendung des Carbamats wiederholt. Die Masse wurde in Kartuschen abgefüllt und härtete unter dem Ausschluß von Luftfeuchtigkeit innerhalb von 1 Tag aus.

*Beispiel 5*

Beispiel 3 wurde so abgewandelt, daß man anstatt des Carbamates 0,05 Gew.-Teile Kaliumhydroxid einsetzte. Das Kaliumhydroxid wurde vor der Zugabe im Vinyltrimethoxysilan aufgelöst. Die fertige Masse härtete an der Luft nicht zu einem Elastomer aus.

*Beispiel 6*

Beispiel 4 wurde so abgewandelt, daß anstatt des Carbamates 0,7 Gew.-Teile Dibutylamin eingesetzt wurden. Die Masse begann nach der Zugabe des Zinnkatalysators bereits im Mischer zu vernetzen.

*Beispiel 7*

Beispiel 3 wurde so abgewandelt, daß anstatt des Dibutylzinndilaurats 0,8 Gew.-Teile einer Titanverbindung eingesetzt wurden, die die folgende Zusammensetzung besaß:

$$(C_4H_9O)_2\ Ti\ [O\text{-}C(CH_3) = CH\text{-}COO\ C_2H_5]_2.$$

Das Vulkanisat wies die folgenden mechanischen Eigenschaften auf:

| | |
|---|---|
| Bruchdehnung: | 590% |
| Zugfestigkeit: | 1,5 $N/mm^2$ |
| E-Modul: | 0,3 $N/mm^2$ |

Die Masse war nach 14wöchiger Lagerung noch gebrauchsfähig.

*Beispiel 8*

Eine 1K-RTV Masse wurde in einem Planetarmischer hergestellt. 353,5 g eines α,ω-Dihydroxypolydimethylsilans (Viskosität 50 Pa.s) wurden mit 210 g eines Bis(trimethylsiloxy)polydimethylsiloxans (Viskosität 1 Pa.s), 28 g Methyltrimethoxysilan und 2,8 g Dimethylammonium-N,N-dimethylcarbamat vermischt. Nach 10 Minuten wurden 84 g einer hydrophoben, pyrogenen Kieselsäure (BET Oberfläche 110 $m^2/g$) zugegeben. 20 Minuten später wurde auf 70°C erwärmt und Vakuum angelegt. Nachdem auf diese Weise die flüchtigen Anteile entfernt waren, wurde die Mischung auf 40°C abgekühlt. 18,9 Methyltrimethoxysilan, 5,6 g 3-Aminopropyltriethoxysilan und 2,1 g einer 65%-igen Lösung von Dibutylzinnbis(2-ethylhexanoat) in Toluol wurden eingemischt, die Mischung kurz im Vakuum entgast und dann in Kartuschen abgefüllt.

2 mm dicke Prüfplatten wurden bei 23°C und 50% rel. Luftfeuchtigkeit hergestellt. Nach 7 tägiger Aushärtung ergaben sie die folgenden mechanischen Eigenschaften:

| | |
|---|---|
| Modul bei 100% Dehnung: | 0,48 $N/mm^2$ |
| Bruchdehnung: | 560 % |
| Zugfestigkeit: | 1,75 $N/mm^2$ |
| Härte: | 22 Shore A. |

Etwa 10 mm dicke Raupen wurden auf Glas-, Kacheln-, Aluminium-, Kupfer- und Polycarbonatplatten aufgetragen. Nach 7 Tagen Aushärtung bei 23°C und 50% rel. Luftfeuchtigkeit wurden die Proben weitere 7 Tage in Wasser gelegt. Keine der Raupen riß anschließend beim Abziehen vom Untergrund ab, sondern alle Risse waren kohäsiv.

**Patentansprüche**

1. Verfahren zur Herstellung von Triorganyloxysilyl- bzw. Diorganyloxyorganosilyl-endgestoppten Poly(diorganosiloxanen) oder solche Siloxane enthaltenden Formulierungen aus α,ω-Dihydroxypoly(diorganosiloxanen) und Tetraorganyloxysilanen oder Triorganyloxyorganosilanen in Gegenwart eines Katalysators, dadurch gekennzeichnet, daß man als Katalysatoren Carbamate der allgemeinen Formel I

$$R_4N^+ \quad ^-O\text{-}\underset{\displaystyle O}{\underset{\|}{C}}\text{—}NR_2 \qquad (I)$$

wobei R für einen Kohlenwasserstoffrest mit 1-20 C-Atomen oder ein H-Atom steht und wobei im Molekül sowohl gleiche als auch verschiedene Reste R vorkommen können, verwendet.

2. Verfahren nach Anspruch 1, dadurch gekennzeichnet, daß die Umsetzung in Gegenwart von Füllstoffen durchgeführt wird.

3. Verwendung von gemäß Anspruch 1 oder 2 hergestellten Triorganyloxysilyl- bzw. Diorganyloxyorganosilyl-endgestoppten Poly(diorganosiloxanen) für 1K-RTV-Massen.

**Claims**

1. A process for the production of triorganyloxysilyl- or diorganyloxyorganosilyl-terminated poly(diorganosiloxanes) or formulations containing such siloxanes from α,ω-dihydroxypoly(diorganosiloxanes) and tetraorganyloxysilanes or triorganyloxyorganosilanes in the presence of a catalyst, characterized in that the catalysts used are carbamates corresponding to general formula I

$$R_4N^+ \quad {}^-O\text{-}\underset{\underset{O}{\|}}{C}\text{—}NR_2 \qquad (I)$$

in which R is a $C_{1\text{-}20}$ hydrocarbon radical or an H atom and both identical and different substituents R may occur in the molecule.

2. A process as claimed in claim 1, characterized in that the reaction is carried out in the presence of fillers.

3. The use of triorganyloxysilyl- or diorganyloxyorganosilyl-terminated poly(diorganosiloxanes) for one component RTV compounds.

**Revendications**

1. Procédé de fabrication poly(diorganosiloxanes) présentant des groupes terminaux triorganyloxysilyle ou diorganyloxyorganosilyle ou de formulations contenant ces siloxanes à partir de alpha-omega-dihydroxypoly (diorganosiloxanes) et de tétraorganyloxysilanes ou de triorganyloxyorganosilanes en présence d'un catalyseur, caractérisé en ce qu'on utilise comme catalyseurs des carbamates de formule générale I

$$R_4N^+ \quad {}^-O\text{-}\underset{\underset{O}{\|}}{C}\text{—}NR_2 \qquad (I)$$

R représentant un reste d'hydrocarbure avec 1 à 20 atomes de carbone ou un atome d'hydrogène et des restes R aussi bien identiques que différents pouvant être présents dans la molécule.

2. Procédé selon la revendication 1, caractérisé en ce que la réaction est exécutée en présence d'agents de charge.

3. Utilisation de poly(diorganosiloxanes) présentant des groupes terminaux triorganyloxysilyle ou diorganyloxyorganosilyle, fabriqués selon la revendication 1 ou 2 pour des masses 1K-RTV.